# EUROPÄISCHE PATENTSCHRIFT

(11) **EP 0 758 572 B1**
(45) Veröffentlichungstag und Bekanntmachung des Hinweises auf die Patenterteilung: **15.11.2000**
(21) Anmeldenummer: 96110555.8
(22) Anmeldetag: 29.06.1996
(51) Int. Cl.: B24C 1/04, B24C 3/18, B24C 11/00, B26D 7/08, B23Q 1/54

(54) **Verfahren zum schichtweisen Abtragen von Material von der Oberfläche eines Werkstücks**
Method for removing layers of material from a surface of a workpiece
Procédé pour enlever des couches de matériaux de la surface d'une pièce

(30) Priorität: 12.08.1995 DE 19529749
(43) Veröffentlichungstag der Anmeldung: 19.02.1997
(73) Patentinhaber: OT Oberflächentechnik GmbH Schwerin, 19061 Schwerin (DE)
(72) Erfinder: Pauls, Carsten, 40599 Düsseldorf (DE)
(74) Vertreter: Ostertag, Ulrich

(56) Entgegenhaltungen:
- EP-A- 0 400 758
- EP-A- 0 477 070
- WO-A-92/13679
- WO-A-95/14552
- GB-A- 1 395 426
- GB-A- 2 236 065
- GB-A- 2 256 612
- US-A- 3 447 985
- US-A- 5 423 713
- SPRECHSAAL, Bd. 123, Nr. 9, 1.September 1990, Seite 864, 867 XP000174750 "WASSER SCHNEIDET GLAS"
- PATENT ABSTRACTS OF JAPAN vol. 16, no. 291 & JP-A-40 075332 (MIYAZAKI MASARU)

## Beschreibung

Die Erfindung betrifft ein Verfahren zum schichtweisen Abtragen von Material von der Oberfläche eines Werkstückes nach dem Oberbegriff des Anspruches 1 sowie eine Vorrichtung zur Durchführung dieses Verfahrens nach dem Oberbegriff des Anspruches 9.

Es ist bekannt, durch Hochdruckwasserstrahlen Beschichtungen von Maschinenbauteilen zu entfernen. Die Beschichtungen können aus metallischen oder anderen, z.B. keramischen Werkstoffen bestehen. Es kann sich dabei um Flamm-, Plasmaspritzschichten, Wärmedämmschichten, Einschleif- oder Hartstoffschichten oder vieles anderes mehr handeln. Beispiele für derartige Verfahren und Vorrichtungen sind in der US-PS 441 666 und der EP-A-0 430 856 beschrieben. Die Arbeitsdrücke des Hochdruckwasserstrahles liegen im Bereich zwischen etwa 600 und etwa 6000 bar. Der Hochdruckwasserstrahl führt ggf. ein Abrasivmittel, z.B. scharfkantiges Korund, mit sich. Er tritt mit einer Geschwindigkeit von ca. 1000 m/s aus der Düsenmündung aus und verursacht sowohl bei diesem Austritt als auch beim Aufprall auf das Werkstück erheblichen Lärm. Dabei tritt ein starker Spritznebel auf, der aus Wasser, Abrasivmittel und Schichtresten, die teilweise giftige Schwermetalle enthalten, besteht. Die bearbeitete Oberfläche des Werkstückes stellt sich als mehr oder weniger rauhe, von benachbarten Abtragriefen gebildete Struktur dar.

Aus der EP 0 400 758 A ist ein Verfahren der im Oberbegriff des Anspruches 1 sowie eine Vorrichtung der im Oberbegriff des Anspruches 9 bezeichneten Art bekannt. Hierbei wird mit der fahrbahren Vorrichtung die Oberfläche einer Rollbahn für Flugzeuge gereinigt. Die oszillatorische Bewegung des Hochdruckwasserstrahls erfolgt durch die Rotation eines Verteilertellers, der den Hochdruckstrahl durch eine Mehrzahl von Düsen an die Oberfläche abgibt, um eine senkrecht zur reinigenden Fläche stehende Achse. Der Hochdruckwasserstrahl tritt als Freistrahl aus den Düsen aus. Mit einem derartigen Verfahren bzw. einer derartigen Vorrichtung ist lediglich eine grobe Reinigung der Oberfläche möglich. Ferner wird durch den in der EP 0 400 758 A vorliegenden Hochdruckwasser-Freistrahl ein, wie oben beschrieben unerwünschter Spritznebel erzeugt.

Aus der Zeitschrift "Zerspantechnik", E. Pauksch, Vieweg Verlag, S. 239 und 320 und der EP 0 526 844 A2 ist die Ausnutzung einer oszillatorischen Bewegung beim Schleifen zum Erzielen einer größeren Glätte der bearbeiteten Oberfläche bekannt. Zur Absaugung von Schleifrückständen weist das Schwingschleifgerät der EP 0 526 844 A2 eine Absaughaube auf. Eine Übertragung dieser Absaughaube zur Aufnahme von Bearbeitungsrückständen auf eine Hochdruckwasserstrahlbearbeitung ist jedoch nicht praktikabel.

Die EP 0 721 851 A1 offenbart einen Reinigungsspachtel mit einem exzentrisch bewegten Spachtelblatt.

Ein als Reinigungsspachtel umrüstbares Schwingschleifgerät offenbart die DE 44 16 475 A1.

Aufgabe der vorliegenden Erfindung ist es, ein Verfahren bzw. eine Vorrichtung der eingangs genannten Art derart auszugestalten, daß die Abtragung des Materials gleichmäßiger, im wesentlichen staubfrei erfolgt und die bearbeitete Oberfläche eine größere Glätte aufweist.

Diese Aufgabe wird, was das Verfahren anbelangt, durch das im Anspruch 1 angegebene Verfahren gelöst.

Erfindungsgemäß wird also der Hochdruckwasserstrahl nicht einfach mit konstanter Geschwindigkeit in Vorschubrichtung vorwärts bewegt; ebensowenig wird dieser konstanten Bewegung einfach eine makroskopische oszillatorische Bewegung überlagert. Dadurch, daß zumindest ein Teil der oszillatorischen Bewegung des Hochdruckwasserstrahls mit Ultraschall hervorgerufen wird, erhalten die Abtragriefen, die der Wasserstrahl auf der Werkstückoberfläche hinterläßt, zusätzlich mikrofeine Furchen. Die Richtung dieser mikrofeinen Furchen wird bestimmt durch die Richtung des Hochdruckwasserstrahles und der diesen überlagerten Schallwellen. Dadurch, daß die Bearbeitung in der Flüssigkeit erfolgt, wird eine effektive Beaufschlagung mit Ultraschall erst möglich; außerdem werden Spritznebel und Schallemissionen weitgehend vermieden. Alle Schichtreste und das verbrauchte Abrasivmittel sammeln sich in der Flüssigkeit und können in geeigneter Weise abgezogen, getrocknet und umweltgerecht entsorgt werden.

Vorzugsweise wird das Verfahren so geführt, daß der Bewegung in Vorschubrichtung zwei in einem Winkel zueinander stehende oszillatorische Bewegungen überlagert werden. Eine dieser oszillatorischen Bewegungen kann dabei durch die angesprochene Ultraschallbeaufschlagung erzielt werden. Der Hochdruckwasserstrahl zeichnet auf diese Weise auf der Oberfläche des Werkstückes Abtragriefen, die grob gesprochen die Form von Ellipsen oder Kreisen, genauer ellipsenähnliche Spiralenform aufweisen. Der Hochdruckwasserstrahl trägt so nicht nur in der Vorschubrichtung das Material gleichmäßiger ab; die bei der Bewegung in Vorschubrichtung erzeugte "Spur" in der Werkstückoberfläche zeigt auch in der Dimension senkrecht zur Vorschubrichtung eine bestimmte Breite, so daß benachbarte "Spuren" besser und mit geringerer Restrauhigkeit zur Überlappung gebracht werden können.

Zweckmäßigerweise ist der Winkel zwischen den beiden oszillatorischen Bewegungen ein rechter.

Bei einer günstigen Ausführungsform des erfindungsgemäßen Verfahrens verläuft mindestens eine oszillatorische Bewegung senkrecht zur Vorschubrichtung. Auf diese Weise wird bei einer vorgegebenen Amplitude der oszillatorischen Bewegung die breiteste "Spur" auf der Werkstückoberfläche erzeugt.

Ein "makroskopischer" Anteil der oszillatorischen Bewegung des Wasserstrahles (der also nicht auf die Ultraschallbeaufschlagung zurückzuführen ist) läßt sich auf unterschiedliche Weisen herbeiführen:

Bei einer Ausgestaltung des erfindungsgemäßen Verfahrens führt der Wasserstrahl in diesem Zusammenhang eine Pendelbewegung aus. Pendelbewegungen lassen sich verhältnismäßig einfach erzeugen.

Bewährt hat sich dabei, wenn der Hochdruckwasserstrahl um eine senkrecht zur Richtung der Vorschubbewegung stehende Achse (y-Achse) um einen Winkel zwischen 5° und 80° pendelt.

Entsprechend hat sich als günstig herausgestellt, wenn der Hochdruckwasserstrahl um eine parallel zur Richtung der Vorschubbewegung stehende Achse (x-Achse) um einen Winkel zwischen 5° und 30° pendelt.

Wird die "makroskopische", nicht durch Ultraschall hervorgerufene oszillatorische Bewegung, wie oben geschildert, durch eine Pendelbewegung erzeugt, bleibt der Einfallswinkel des Hochdruckwasserstrahles gegenüber der Werkstückoberfläche nicht konstant. Innerhalb der oben genannten Grenzen des Pendelwinkels wird gleichwohl eine hervorragende Oberflächengüte erzielt, da durch den "normalen" Vorschub des Hochdruckwasserstrahles die unterschiedliche Abtragwirkung der unterschiedlichen Einfallswinkel kompensiert wird.

Alternativ ist es aber selbstverständlich auch möglich, daß der Hochdruckwasserstrahl bei der oszillatorischen Relativbewegung gegenüber dem Werkstück parallel zu sich selbst verschoben wird. Im allgemeinen ist es einfacher, das Werkstück stationär zu belassen und den Hochdruckwasserstrahl entsprechend oszillieren zu lassen. Bei kleinen Werkstücken kann aber durchaus auch in Betracht gezogen werden, die Relativbewegung durch eine Oszillationsbewegung des Werkstückes selbst hervorzurufen.

Die Ultraschallwellen können unter unterschiedlichem Winkel, der von parallel bis zu senkrecht zur Werkstückoberfläche reicht, eingestrahlt werden. Durch Einstellung des Auftreffwinkels der Ultraschallwellen auf die Werkstückoberfläche können einfallende Welle und reflektierte Welle überlagert und Amplitudenerhöhungen erreicht werden, welche den auf den Hochdruckwasserstrahl und die mitgeführten Abrasivmittel ausgeübten Effekt verstärken. Insgesamt wird durch Verwendung von Ultraschall der Weg, den der Hochdruckwasserstrahl auf der Werkstückoberfläche zurücklegt, erheblich vergrößert und die kinetische Energie des Hochdruckwasserstrahles entsprechend besser ausgenutzt.

Die oben genannte Aufgabe wird, was die erfindungsgemäße Vorrichtung angeht, mit den im Patentanspruch 9 angegebenen Mitteln gelöst.

Die Vorteile der erfindungsgemäßen Vorrichtung und der vorteilhaften Ausgestaltungen, die in den Ansprüchen 10 bis 16 angegeben sind, entsprechen sinngemäß denjenigen, die oben für das erfindungsgemäße Verfahren erwähnt wurden.

Ein Ausführungsbeispiel der Erfindung wird nachfolgend anhand der Zeichnung näher erläutert; es zeigen
- Figur 1:: schematisch und teilweise im Schnitt eine Vorrichtung zum schichtweisen Abtragen von Material mittels eines Hochdruckwasserstrahles;
- Figur 2:: eine perspektivische Draufsicht auf die Wasserstrahldüse und das Werkstück von Figur 1 in etwas vergrößertem Maßstab.

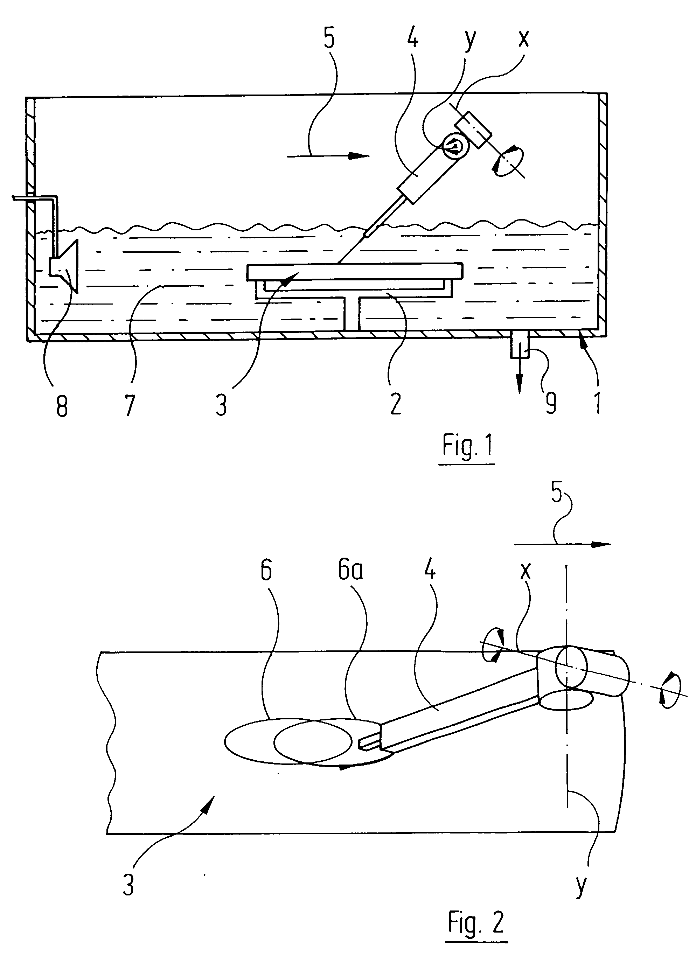

In Figur 1 ist eine Vorrichtung dargestellt, welche dem schichtweisen Abtragen von Material von einem Werkstück mittels eines Hochdruckwasserstrahles dient. Die Vorrichtung umfaßt einen Behandlungsbehälter 1, an dessen Boden ein Träger 2 für ein zu behandelndes Werkstück 3 befestigt ist. Bei dem hier dargestellten Ausführungsbeispiel ist der Träger 2 unbeweglich; das Werkstück 3 ist auf ihn ebenso unbeweglich aufgespannt.

An einer hier nicht weiter interessierenden und daher auch nicht dargestellten Tragstruktur, beispielsweise an einem Roboterarm, ist eine Wasserstrahldüse 4 so befestigt, daß sie um zwei zueinander senkrecht stehende Richtungen pendeln kann. Dieser doppelten Pendelbewegung ist eine lineare Vorschubbewegung in Richtung des Pfeiles 5 überlagert.

Im einzelnen sind die Pendelbewegungen der Wasserstrahldüse wie folgt:

Eine erste Pendelbewegung findet senkrecht zur Vorschubrichtung um eine Achse statt, die hier y-Achse genannt ist. Der Pendelwinkel liegt zwischen 5° und 80°.

Die zweite Pendelbewegung erfolgt um eine Achse, die parallel zur Vorschubrichtung liegt und hier x-Achse genannt wird. Hier wird ein Pendelwinkel zwischen 5° und 30° eingehalten.

Im Ergebnis der Pendelbewegung entstehen auf dem Werkstück 3, wie in Figur 2 dargestellt, Abtragriefen 6, welche die Form von Ellipsen (im Spezialfall auch die Form von Kreisen) aufweisen. Wird der doppelten Pendelbewegung der Wasserstrahldüse 4 zusätzlich ein linearer Vorschub in Richtung des Pfeiles 5 überlagert, so entstehen Abtragriefen 6, 6a (vergl. Figur 2), welche in der vereinfachten Darstellung von Figur 2 als linear zueinander versetzte Ellipsen veranschaulicht sind. Tatsächlich handelt es sich dabei jedoch um eine ununterbrochene, spiralähnliche Bewegungsspur.

Der Behandlungsbehälter 1 ist mit destilliertem Wasser 7 bis zu einem bestimmten Spiegel 8 oberhalb des Werkstückes 3 und unterhalb der Mündung der Wasserstrahldüse 4 angefüllt. In das Wasser 7 taucht außerdem ein Ultraschallgeber 8 ein, dessen Abstrahlrichtung im wesentlichen parallel zur Oberfläche des Werkstückes 3 verläuft.

Die oben beschriebene Vorrichtung arbeitet wie folgt:

Das zu bearbeitende Werkstück 3, z.B. eine Turbinenschaufel, wird innerhalb des Wasserbades 7 auf dem Träger 2 fixiert. Die Wasserstrahldüse 4 wird so ausgerichtet, daß der mittlere Auftreffwinkel des Wasserstrahles parallel zur Bewegungsrichtung (Pfeil 5) zwischen 20° und 70° liegt.

In einer Position außerhalb des Werkstückes 3 wird der Hochdruckwasserstrahl eingeschaltet. Unter einem Arbeitsdruck von bis zu 6000 Bar tritt der Hochdruckwasserstrahl ausn der Düsenmündung (Durchmesser ca. 25 µm bis ca. 550 µm) mit einer Geschwindigkeit von ca. 1000 m/s⁻¹ aus.

Der Begriff "Hochdruckwasserstrahl" wird hier vereinfachend für eine Suspension scharfkantigen Abrasivmittels, beispielsweise von Korund, in Wasser verwendet. Die Korngröße des Abrasivmittels liegt zwischen 50 mesh und 320 mesh bei einem Abrasivfluß von 0,1 bis 1 kg/min⁻¹.

Nunmehr werden durch geeignete Antriebe die doppelte Pendelbewegung um die y- und x-Achse sowie die lineare Vorschubbewegung in Richtung des Pfeiles 5 eingeleitet. Gleichzeitig wird der Ultraschallgeber 8 in Funktion genommen. Der Hochdruckwasserstrahl tritt nunmehr in den oben geschilderten elliptisch bzw. elliptisch-spiraligen Bewegungen von der Seite her in das Werkstück 3 ein und trägt dort eine Materialschicht von der Oberfläche ab. Die vom Ultraschallgeber 8 erzeugten Ultraschallwellen werden über das Wasser 7 im Behandlungsbehälter 1 auf den Hochdruckwasserstrahl und die von ihm mitgeführten Abrasivteilchen übertragen. Die Ultraschallschwingung überlagert den elliptischen bzw. elliptisch-spiraligen Abtragriefen 6, die von dem Abrasivmittel auf dem Werkstück 3 hinterlassen werden, eine zusätzliche Wellung. Hierdurch wird der Weg, den der Hochdruckwasserstrahl auf dem Werkstück 3 zurücklegt, länger, was eine erhebliche Zunahme der Schleifwirkung mit sich bringt. Die kinetische Energie des Hochdruckwasserstrahles wird so erheblich besser ausgenutzt. Zusätzlich kommt es zu einem Poliereffekt, der zu glatteren und gleichmäßigeren Oberflächen führt. Schaltet man einen Elektropoliervorgang (wie er an und für sich bekannt ist) nach, können mit dem beschriebenen Verfahren Oberflächenrauhigkeit von 1,5 µRA erzeugt werden. Aufwendige Schleif- und Läppvorgänge können eingespart werden. Da die Werkstückoberfläche sauber und frei von Spannungen ist, kann außerdem eine sehr präzise Kontrolle der Oberfläche auf Risse oder sonstige Schäden ohne weitere Vorbehandlung durchgeführt werden.

Dadurch, daß die Mündung der Wasserstrahldüse 4 unterhalb des Spiegel des Wassers 7 liegt, werden Spritznebel und Schallemissionen weitgehend vermieden. Alle Schichtreste und das verbrauchte Abrasivmittel sammeln sich in dem Wasser 7 und können über einen Auslaß 9 mittels einer Sumpf-Schlammpresse oder dergleichen abgezogen, danach getrocknet und umweltgerecht entsorgt werden.

Bei einem, in der Zeichnung nicht dargestellten Ausführungsbeispiel wird die oszillatorische Relativbewegung zwischen der Wasserstrahldüse 4 und dem Werkstück 3 dadurch erzielt, daß die Wasserstrahldüse 4 an einem Verschiebetisch montiert ist. Dieser Verschiebetisch ist so angetrieben und geführt, daß er in zwei senkrecht aufeinander stehenden Richtungen lineare hin- und hergehende Bewegungen ausführt. Der Verschiebetisch selbst sitzt auf einer Grundplatte, welche direkt an den Greifarm eines entsprechenden Roboters angebaut sein kann.

Unter bestimmten Bedingungen kann es - insbesonder bei kleinen Werkstücken - auch in Frage kommen, das Werkstück 3 selbst auf den Verschiebetisch aufzuspannen, so daß dann die relative Oszillationsbewegung zwischen Hochdruckwasserstrahl und Werkstück 3 durch eine entsprechende Bewegung des Werkstückes 3 hervorgerufen wird.

## Patentansprüche

1. Verfahren zum schichtweisen Abtragen von Material von der Oberfläche eines Werkstückes, bei welchem
a) ein gegebenenfalls Abrasivmittel mitführender Hochdruckwasserstrahl mit im wesentlichen konstanter Relativgeschwindigkeit in einer Vorschubrichtung über die abzutragenden Oberflächenbereiche geführt wird;
b) der Bewegung des Hochdruckwasserstrahles in Vorschubrichtung mindestens eine oszillatorische Bewegung überlagert wird,
dadurch gekennzeichnet, daß
c) der Hochdruckwasserstrahl unterhalb des Spiegels einer Flüssigkeit (7) auf das Werkstück (3) geführt wird;
d) mindestens ein Teil der oszillatorischen Bewegung des Hochdruckwasserstrahles durch Beaufschlagung des Hochdruckwasserstrahles mit Ultraschall hervorgerufen wird.

2. Verfahren nach Anspruch 1, dadurch gekennzeichnet, daß der Bewegung in Vorschubrichtung (5) zwei in einem Winkel zueinander stehende oszillatorische Bewegungen überlagert werden.

3. Verfahren nach Anspruch 2, dadurch gekennzeichnet, daß der Winkel ein rechter ist.

4. Verfahren nach einem der Ansprüche 1 bis 3, dadurch gekennzeichnet, daß mindestens eine oszillatorische Bewegung senkrecht zur Vorschubrichtung (5) verläuft.

5. Verfahren nach einem der vorhergehenden Ansprüche, dadurch gekennzeichnet, daß der Wasserstrahl zur Erzeugung der oszillatorischen Bewegung eine Pendelbewegung durchführt.

6. Verfahren nach Anspruch 5, dadurch gekennzeichnet, daß der Hochdruckwasserstrahl um eine senkrecht zur Richtung (5) der Vorschubbewegung stehende Achse (y-Achse) um einen Winkel zwischen 5° und 80° pendelt.

7. Verfahren nach Anspruch 5 oder 6, dadurch gekennzeichnet, daß der Hochdruckwasserstrahl um eine parallel zur Richtung (5) der Vorschubbewegung stehende Achse (x-Achse) um einen Winkel zwischen 5° und 30° pendelt.

8. Verfahren nach einem der Ansprüche 1 bis 4, dadurch gekennzeichnet, daß der Hochdruckwasserstrahl bei der oszillatorischen Relativbewegung gegenüber dem Werkstück (3) parallel zu sich selbst verschoben wird.

9. Vorrichtung zur Durchführung des Verfahrens nach einem der Ansprüche 1 bis 8 mit
a) einer Wasserstrahldüse;
b) einer Hochdruckpumpe, welche einen aus der Wasserstrahldüse austretenden, ggf. Abrasivmittel mitführenden Hochdruckwasserstrahl erzeugt;
c) einer Einrichtung, welche die Wasserstrahldüse mit im wesentlichen konstanter Relativgeschwindigkeit in einer Vorschubrichtung über die abzutragenden Oberflächenbereiche führt;
d) einer Einrichtung, welche der Bewegung der Wasserstrahldüse in Vorschubrichtung mindestens eine oszillatorische Bewegung überlagert;
dadurch gekennzeichnet, daß
e) ein eine Flüssigkeit (7) enthaltender Behandlungsbehälter (1) vorgesehen ist, wobei die Mündung der Wasserstrahldüse (4) und das Werkstück (3) unterhalb des Spiegels der Flüssigkeit (7) angeordnet sind;
f) unterhalb des Spiegels der Flüssigkeit (7) im Behandlungsbehälter (1) ein Ultraschallgeber (8) vorgesehen ist, welcher den aus der Wasserstrahldüse (4) austretenden Hochdruckwasserstrahl beaufschlagt.

10. Vorrichtung nach Anspruch 9, dadurch gekennzeichnet,
daß eine Einrichtung vorgesehen ist, welche der Bewegung der Wasserstrahldüse (4) zwei in einem Winkel zueinander stehende oszillatorische Bewegungen überlagert.

11. Vorichtung nach Anspruch 10, dadurch gekennzeichnet,
daß der Winkel ein rechter ist.

12. Vorrichtung nach einem der Ansprüche 9 bis 11,
dadurch gekennzeichnet, daß eine der oszillatorischen Relativbewegungen der Wasserstrahldüse (4) gegenüber dem Werkstück (3) senkrecht zur Vorschubrichtung (5) erfolgt.

13. Vorrichtung nach einem der Ansprüche 9 bis 12,
dadurch gekennzeichnet, daß sie für jede oszillatorische Relativbewegung eine Pendelbewegung der Wasserstrahldüse (4) erzeugt.

14. Vorrichtung nach einem der Ansprüche 9 bis 12,
dadurch gekennzeichnet, daß die Einrichtung zur Erzeugung der oszillatorischen Relativbewegung(en) einen Verschiebetisch umfaßt, an welchem die Wasserstrahldüse (4) oder das Werkstück (3) befestigt ist, und der in mindestens einer Richtung in einer linearen, oszillatorischen Bewegung antreibbar ist.

15. Vorrichtung nach Anspruch 14, dadurch gekennzeichnet,
daß der Verschiebetisch von einem Roboterarm geführt ist.

16. Vorrichtung nach einem der Ansprüche 9 bis 15, dadurch
gekennzeichnet, daß im Bodenbereich des Behandlungsbehälters (1) ein Auslaß (9) vorgesehen ist, über welchen abgetragenes Material und verbrauchtes Abrasivmittel abgezogen werden können.

## Claims

1. Method of removing material layer by layer from the surface of a workpiece, whereby
a) a high-pressure water jet optionally containing an abrasive agent is conveyed at a substantially constant relative speed in a feed direction over the surface regions to be eroded;
b) superimposed on the motion of the high-pressure water jet in feed direction is at least one oscillatory motion,
characterized in that
c) the high-pressure water jet is conveyed below the level of a liquid (7) onto the workpiece (3);
d) at least some of the oscillatory motion of the high-pressure water jet is generated by acting upon the high-pressure water jet with ultrasound.

2. Method according to claim 1, characterized in that two oscillatory motions disposed at an angle to one another are superimposed on the motion in feed direction (5).

3. Method according to claim 2, characterized in that the angle is a right angle.

4. Method according to one of claims 1 to 3, characterized in that at least one oscillatory motion extends at right angles to the feed direction (5).

5. Method according to one of the preceding claims, characterized in that the water jet for generating the oscillatory motion effects a pendulum motion.

6. Method according to claim 5, characterized in that the high-pressure water jet swings through an angle of between 5° and 80° about an axis (y axis) perpendicular to the direction (5) of the feed motion.

7. Method according to claim 5 or 6, characterized in that the high-pressure water jet swings through an angle of between 5° and 30° about an axis (x axis) parallel to the direction (5) of the feed motion.

8. Method according to one of claims 1 to 4, characterized in that the high-pressure water jet during the oscillatory motion relative to the workpiece (3) is displaced parallel to itself.

9. Apparatus for effecting the method according to one of claims 1 to 8 comprising
a) a water jet nozzle;
b) a high-pressure pump, which produces a high-pressure water jet optionally containing an abrasive agent, which exits from the water jet nozzle;
c) a device which conveys the water jet nozzle at a substantially constant relative speed in a feed direction over the surface regions to be eroded;
d) a device which superimposes at least one oscillatory motion on the motion of the water jet nozzle in feed direction;
characterized in that
e) a treatment container (1) containing a liquid (7) is provided, wherein the mouth of the water jet nozzle (4) and the workpiece (3) are disposed below the level of the liquid (7);
f) provided below the level of the liquid (7) in the treatment container (1) is an ultrasonic generator (8), which acts upon the high-pressure water jet exiting from the water jet nozzle (4).

10. Apparatus according to claim 9, characterized in that a device is provided, which superimposes two oscillatory motions disposed at an angle to one another upon the motion of the water jet nozzle (4).

11. Apparatus according to claim 10, characterized in that the angle is a right angle.

12. Apparatus according to one of claims 9 to 11, characterized in that one of the oscillatory motions of the water jet nozzle (4) relative to the workpiece (3) is effected at right angles to the feed direction (5).

13. Apparatus according to one of claims 9 to 12, characterized in that it generates a pendulum motion of the water jet nozzle (4) for each oscillatory relative motion.

14. Apparatus according to one of claims 9 to 12, characterized in that the device for generating the oscillatory relative motion(s) comprises a sliding table, to which the water jet nozzle (4) or the workpiece (3) is fastened and which in at least one direction is settable in linear, oscillating motion.

15. Apparatus according to claim 14, characterized in that the sliding table is guided by a robot arm.

16. Apparatus according to one of claims 9 to 15, characterized in that provided in the bottom region of the treatment container (1) is an outlet (9), through which removed material and used abrasive agent may be withdrawn.

## Revendications

1. Procédé d'enlèvement, par couches, d'un matériau de la surface d'une pièce, dans lequel
a) un jet d'eau sous haute pression charriant, éventuellement, un agent abrasif est guidé avec vitesse relative sensiblement constante, dans une direction d'avance, au-dessus des zones de surface à rogner ;
b) au moins un mouvement oscillatoire vient se superposer au mouvement du jet d'eau sous haute pression dans la direction d'avance,
caractérisé par le fait que
c) le jet d'eau sous haute pression est guidé sur la pièce (3) au-dessous du niveau d'un liquide (7) ;
d) au moins une partie du mouvement oscillatoire du jet d'eau sous haute pression est provoquée en sollicitant ledit jet d'eau sous haute pression par des ultrasons.

2. Procédé selon la revendication 1, caractérisé par le fait que deux mouvements oscillatoires, décrivant un angle l'un par rapport à l'autre, viennent se superposer au mouvement dans la direction d'avance (5).

3. Procédé selon la revendication 2, caractérisé par le fait que l'angle est un angle droit.

4. Procédé selon l'une des revendications 1 à 3, caractérisé par le fait qu'au moins un mouvement oscillatoire présente une trajectoire perpendiculaire à la direction d'avance (5) .

5. Procédé selon l'une des revendications précédentes, caractérisé par le fait que le jet d'eau accomplit un mouvement pendulaire en vue d'engendrer le mouvement oscillatoire.

6. Procédé selon la revendication 5, caractérisé par le fait que le jet d'eau sous haute pression oscille d'un angle compris entre 5° et 80°, autour d'un axe (axe des y) perpendiculaire à la direction (5) du mouvement d'avance.

7. Procédé selon la revendication 5 ou 6, caractérisé par le fait que le jet d'eau sous haute pression oscille d'un angle compris entre 5° et 30°, autour d'un axe (axe des x) parallèle à la direction (5) du mouvement d'avance.

8. Procédé selon l'une des revendications 1 à 4, caractérisé par le fait que le jet d'eau sous haute pression est déplacé parallèlement à lui-même au cours du mouvement oscillatoire relatif vis-à-vis de la pièce (3).

9. Dispositif pour la mise en oeuvre du procédé selon l'une des revendications 1 à 8, comprenant
a) une buse à jet d'eau ;
b) une pompe haute pression, produisant un jet d'eau sous haute pression sortant de la buse à jet d'eau et charriant, éventuellement, un agent abrasif ;
c) un mécanisme guidant la buse à jet d'eau avec vitesse relative sensiblement constante, dans une direction d'avance, au-dessus des zones de surface à rogner ;
d) un mécanisme superposant au moins un mouvement oscillatoire au mouvement de la buse à jet d'eau, dans la direction d'avance ;
caractérisé par le fait
e) qu'il est prévu un conteneur de traitement (1) renfermant un liquide (7), la pièce (3) et l'embouchure de la buse (4) à jet d'eau étant disposées au-dessous du niveau du liquide (7) ;
f) le conteneur de traitement (1) loge, au-dessous du niveau du liquide (7), un générateur d'ultrasons (8) qui sollicite le jet d'eau sous haute pression sortant de la buse (4) à jet d'eau.

10. Dispositif selon la revendication 9, caractérisé par le fait qu'il est prévu un mécanisme superposant, au mouvement de la buse (4) à jet d'eau, deux mouvements oscillatoires décrivant un angle l'un par rapport à l'autre.

11. Dispositif selon la revendication 10, caractérisé par le fait que l'angle est un angle droit.

12. Dispositif selon l'une des revendications 9 à 11, caractérisé par le fait que l'un des mouvements oscillatoires relatifs de la buse (4) à jet d'eau, vis-à-vis de la pièce (3), s'effectue perpendiculairement à la direction d'avance (5).

13. Dispositif selon l'une des revendications 9 à 12, caractérisé par le fait qu'il engendre, pour chaque mouvement oscillatoire relatif, un mouvement pendulaire de la buse (4) à jet d'eau.

14. Dispositif selon l'une des revendications 9 à 12, caractérisé par le fait que le mécanisme, destiné à engendrer le(s) mouvement(s) oscillatoire(s) relatif(s), comprend un plateau coulissant auquel la buse (4) à jet d'eau ou la pièce (3) est fixée et qui peut être entraîné, dans au moins une direction, pour accomplir un mouvement oscillatoire linéaire.

15. Dispositif selon la revendication 14, caractérisé par le fait que le plateau coulissant est guidé par un bras de robot.

16. Dispositif selon l'une des revendications 9 à 15, caractérisé par le fait qu'il est prévu, dans la région du fond du conteneur de traitement (1), une sortie (9) par l'intermédiaire de laquelle du matériau enlevé et de l'agent abrasif utilisé peuvent être évacués.
